# EUROPEAN PATENT APPLICATION

(11) **EP 4 589 819 A1**
(43) Date of publication of application: **23.07.2025**
(21) Application number: 24220456.8
(22) Date of filing: 17.12.2024
(51) Int. Cl.: H02K 3/50

(54) **MOTOR**

(30) Priority: 16.01.2024 JP 2024004476
(71) Applicant: TOYOTA JIDOSHA KABUSHIKI KAISHA, Aichi-ken, 471-8571 (JP)
(72) Inventor: YOSHIKAWA, Makoto, Toyota-shi, 471-8571 (JP); URANO, Hiroaki, Toyota-shi, 471-8571 (JP); TAKENAKA, Tetsuhiro, Toyota-shi, 471-8571 (JP); KANADA, Yuichiro, Toyota-shi, 471-8571 (JP); OITA, Shinji, Toyota-shi, 471-8571 (JP); NAGAI, Shingo, Toyota-shi, 471-8571 (JP); FUKUNAGA, Shota, Toyota-shi, 471-8571 (JP); TSUCHIDA, Michitaka, Toyota-shi, 471-8571 (JP)
(74) Representative: TBK

(57) **Abstract**

A motor (10; 100; 200; 300; 400) includes a cylindrical stator core (18), a coil (20), a busbar (22), at least one busbar holder (24, 26), and a housing (28). The busbar (22) is configured to be connected to one end of the coil (20) that protrudes beyond an end face of the stator core (18). The busbar (22) includes a connecting portion (22c) connected to the one end of the coil (20) from outside in a radial direction. The at least one busbar holder (24, 26) is located radially outward of the one end of the coil (20). The housing (28) is configured to hold the stator core (18) and the at least one busbar holder (24, 26) from outside in the radial direction. The connecting portion (22c) extends from the busbar holder (24, 26).

## Description

### BACKGROUND OF THE INVENTION

### 1. Field of the Invention

The technique disclosed in the present specification relates to motors.

### 2. Description of Related Art

Japanese Unexamined Patent Application Publication No. 2019-170071 (JP 2019-170071 A) describes a motor. This motor includes a stator core in which a coil is disposed, busbars connected to one end of the coil, and a busbar holder that holds the busbars. The busbar holder faces the stator core in the axial direction and is held by a housing from outside in a radial direction.

### SUMMARY OF THE INVENTION

In the above motor, a holding force is applied radially inward from the housing to the busbar holder. However, the busbar holder is disposed so as to face the stator core in the axial direction. Therefore, the radial holding force applied to the busbar holder is less likely to be transmitted from the busbar holder to a stator, and it is difficult to use this holding force as a force for holding the stator. The present disclosure provides a motor in which a holding force that is applied from a housing to a busbar holder is also used as a force for holding a stator core.

A motor according to an aspect of the present disclosure includes a cylindrical stator core, a coil disposed in the stator core, a busbar, at least one busbar holder, and a housing. The busbar is configured to be connected to one end of the coil that protrudes beyond an end face of the stator core. The busbar includes a connecting portion connected to the one end of the coil from outside in a radial direction. The at least one busbar holder is configured to hold the busbar, and is located radially outward of the one end of the coil. The housing is configured to hold the stator core and the at least one busbar holder from outside in the radial direction. The connecting portion extends from the busbar holder.

In the above motor, the busbar holder is located between the one end of the coil and the housing in the radial direction. The connecting portion of the busbar that extends from the busbar holder is connected to the one end of the coil from outside in the radial direction. With this configuration, a radial holding force applied from the housing to the busbar holder is easily transmitted to the stator core via the connection portion between the busbar and the coil. In other words, the holding force applied from the housing to the busbar holder can also be used as a force for holding the stator core. This can reduce, for example, a holding force that is applied from the housing directly to the stator core. In this case, stress (i.e., strain) that is generated in the stator core is reduced, and magnetic loss in the stator core is reduced.

In the motor according to the aspect of the present disclosure, the housing may have a recess that accommodates at least part of the busbar holder. The busbar holder may be in contact with the housing from inside in the radial direction in the recess. With this configuration, the stator core can be easily positioned relative to the housing by aligning the position of the busbar holder with the recess of the housing.

In the motor according to the aspect of the present disclosure, the busbar holder may be in contact with the housing on at least one side in an axial direction in the recess. This configuration allows the stator core to be accurately positioned relative to the housing in the axial direction.

In the motor according to the aspect of the present disclosure, the busbar holder may be in contact with the housing on at least one side in a circumferential direction in the recess. This configuration allows the stator core to be accurately positioned relative to the housing in the circumferential direction.

In the motor according to the aspect of the present disclosure, the housing may hold the stator core and the busbar holder by an interference fit. This configuration can be implemented by, but not particularly limited to, fitting the housing on the stator core and the busbar holder by shrink fitting.

In the motor according to the aspect of the present disclosure, the busbar may include an extending portion extending in a circumferential direction. The at least one busbar holder may include a plurality of busbar holders that holds the extending portion of the busbar and that is held by the housing from outside in the radial direction. This configuration allows the housing to stably hold the stator core via the busbar holders.

In the motor according to the aspect of the present disclosure, the busbar holders may be arranged at equal intervals in the circumferential direction. This configuration allows the housing to more stably hold the stator core via the busbar holders.

In the motor according to the aspect of the present disclosure, the busbar may be a busbar configured to electrically connect an external connection terminal of the motor and the one end of the coil.

In the motor according to the aspect of the present disclosure, the motor may be a three-phase motor. The external connection terminal may be a U-phase external connection terminal, a V-phase external connection terminal, or a W-phase external connection terminal. The one end of the coil may be one end on an input and output side of a U-phase coil, a V-phase coil, or a W-phase coil.

In the motor according to the aspect of the present disclosure, the motor may be a three-phase motor. The external connection terminal may be a neutral point external connection terminal. The one end of the coil may be an end on a neutral point side of a U-phase coil, a V-phase coil, or a W-phase coil.

In the motor according to the aspect of the present disclosure, the motor may be a three-phase motor. The busbar may be a neutral point busbar that is configured to electrically connect the one end of the coil and one end of another coil and that constitutes a neutral point.

In the motor according to the aspect of the present disclosure, the busbar holder may hold a plurality of busbars including the busbar. Since the busbar holder holds a plurality of busbars, rigidity of the busbar holder is increased. Accordingly, a holding force applied from the housing to the busbar holder can be more reliably transmitted to the stator core.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a plan view showing a configuration of a motor according to a first embodiment;
FIG. 2 is a circuit diagram of the motor according to the first embodiment;
FIG. 3 is a sectional view taken along line III-III in FIG. 1, where a shaft and a rotor are not shown;
FIG. 4 is a sectional view taken along line IV-IV in FIG. 1, where the shaft and the rotor are not shown;
FIG. 5 is a sectional view taken along line V-V in FIG. 1, where the shaft and the rotor are not shown;
FIG. 6 is a circuit diagram showing a configuration of a motor according to a second embodiment;
FIG. 7 is a sectional view showing the configuration of the motor according to the second embodiment;
FIG. 8 is a circuit diagram showing a configuration of a motor according to a third embodiment;
FIG. 9 is a plan view showing a configuration of a motor according to a fourth embodiment; and
FIG. 10 is a sectional view showing a configuration of a motor according to a fifth embodiment.

### DETAILED DESCRIPTION OF EMBODIMENTS

Hereinafter, representative, non-limiting specific examples of the present disclosure will be described in detail with reference to the drawings. This detailed description is merely intended to provide those skilled in the art with details for carrying out preferred examples of the present disclosure, and is not intended to limit the scope of the present disclosure. Additional features disclosed below can be used separately or in conjunction with other features in order to provide further improved motors.

Combinations of features and steps disclosed in the following detailed description are not essential for carrying out the present disclosure in the broadest sense, but are described only to explain representative specific examples of the present disclosure. The various features of the representative examples described above and below and the various features described in the independent and dependent claims need not necessarily be combined in the manner or order described in the specific examples in order to provide additional and useful embodiments of the present disclosure.

All features described in the present specification and/or the claims are intended to be disclosed individually and independently of one another, apart from the configurations of features described in the embodiments and/or the claims, as limitations on the disclosure and claimed particular matters as originally filed. Description regarding all numerical ranges and groups or collections is intended to disclose their intermediate configurations as limitations on the disclosure and claimed particular matters as originally filed.

### Embodiments

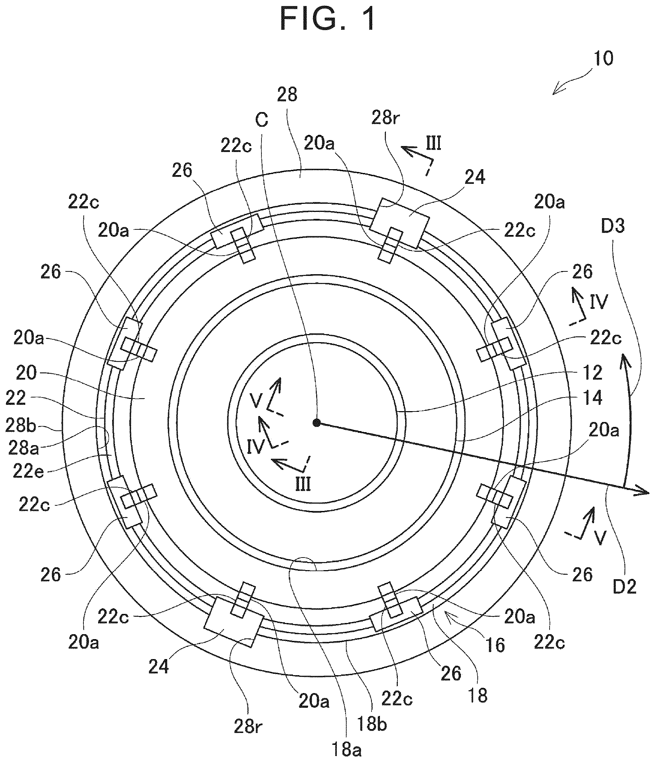

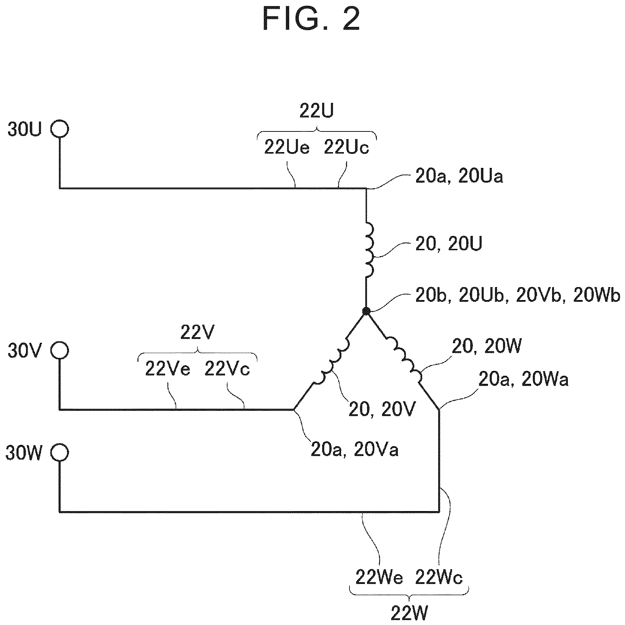

A motor 10 according to an embodiment will be described with reference to FIGS. 1 to 5. The motor 10 is, for example, a traction motor for an electrified vehicle. As shown in FIG. 2, the motor 10 is, for example, a three-phase motor. The motor 10 includes a plurality of external connection terminals 30U, 30V, and 30W. The external connection terminals 30U, 30V, and 30W include a U-phase external connection terminal 30U, a V-phase external connection terminal 30V, and a W-phase external connection terminal 30W. The U-phase external connection terminal 30U is a terminal through which U-phase alternating current (AC) power is input and output, the V-phase external connection terminal 30V is a terminal through which V-phase AC power is input and output, and the W-phase external connection terminal 30W is a terminal through which W-phase AC power is input and output. The motor 10 is driven by the U-phase, V-phase, and W-phase AC power supplied to the external connection terminals 30U, 30V, and 30W.

As shown in FIGS. 1 to 3, the motor 10 includes a shaft 12, a rotor 14, a stator 16, a plurality of busbars 22, a plurality of busbar holders 24, 26, and a housing 28. The shaft 12 extends along a central axis C of the motor 10. The rotor 14 is a generally cylindrical member and extends along the central axis C. The rotor 14 is fixed to the shaft 12, and rotates with the shaft 12 about the central axis C.

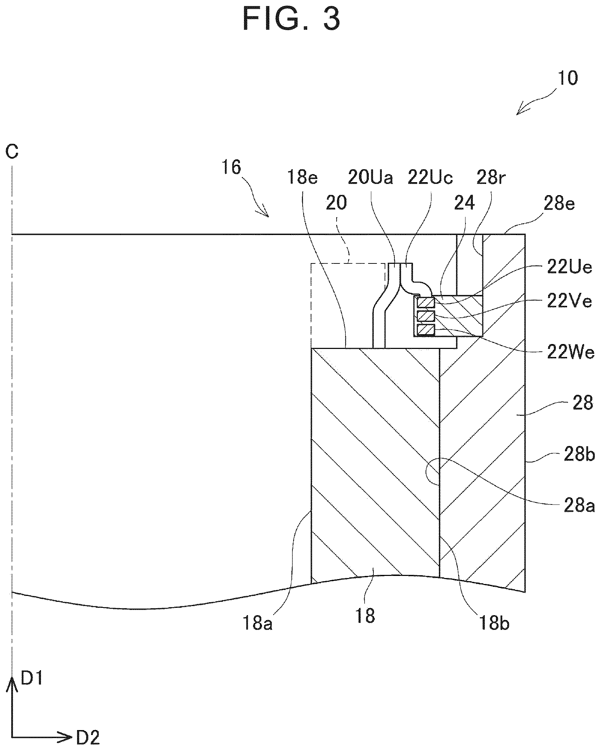

In the present specification, a cylindrical coordinate system is defined by axial, radial, and circumferential directions based on the central axis C of the motor 10. The axial direction is a direction parallel to the central axis C, and is defined by a coordinate axis D1 parallel to the central axis C (see FIG. 3). In the present specification, the positive direction of the coordinate axis D1 is sometimes referred to as one side in the axial direction, and the negative direction of the coordinate axis D1 is sometimes referred to as the other side in the axial direction. The radial direction is a direction perpendicular to the central axis C, and is defined by a coordinate axis D2 with the central axis C as its origin (see FIG. 1). In the present specification, the positive direction of the coordinate axis D2 is sometimes referred to as outside in the radial direction, radially outward, or outer side in the radial direction, and the negative direction of the coordinate axis D2 is sometimes referred to as inside in the radial direction, radially inward, or inner side in the radial direction. The circumferential direction is a direction perpendicular to the axial direction and the radial direction, and is defined by a coordinate axis D3 that revolves around the central axis C (see FIG. 1). In the present specification, the positive direction of the coordinate axis D3 is sometimes referred to as one side in the circumferential direction, and the negative direction of the coordinate axis D3 is sometimes referred to as the other side in the circumferential direction.

The stator 16 is a generally cylindrical member. The stator 16 is disposed radially outward of the rotor 14. The stator 16 includes a stator core 18 and a plurality of coils 20. In the motor 10, the U-phase, V-phase, and W-phase AC power is input to and output from the coils 20 of the stator 16 through the external connection terminals 30U, 30V and 30W to cause the rotor 14 and the shaft 12 to rotate.

The stator core 18 is a cylindrical member. The stator core 18 includes a first end face 18e and a second end face (not shown), and extends in the axial direction from the first end face 18e to the second end face. The stator core 18 further includes an inner peripheral surface 18a and an outer peripheral surface 18b. The inner peripheral surface 18a is a radially inner surface of the stator core 18, and extends in a cylindrical shape in the circumferential direction. The inner peripheral surface 18a of the stator core 18 defines a through hole that accommodates at least part of the rotor 14. The inner peripheral surface 18a of the stator core 18 has a plurality of slots (not shown) arranged in the circumferential direction. The outer peripheral surface 18b of the stator core 18 is a radially outer surface of the stator core 18, and extends in a cylindrical shape in the circumferential direction. The outer peripheral surface 18b of the stator core 18 is in contact with the housing 28. The inner peripheral surface 18a and the outer peripheral surface 18b extend in the axial direction between the first end face 18e and the second end face (not shown).

The coils 20 are disposed in the slots of the stator core 18. Specifically, each of the coils 20 (hereinafter referred to as each coil 20) is disposed in two or more slots. Each coil 20 is a segment coil and is made of a conductor wire having a rectangular cross section. The specific configuration of the coils 20 is not particularly limited. For example, the coils 20 may have a concentrated winding configuration or a distributed winding configuration.

As an example, the coils 20 include at least one U-phase coil 20U, at least one V-phase coil 20V, and at least one W-phase coil 20W (see FIG. 2). The U-phase coil 20U has a first end 20Ua on the input and output side and a second end 20Ub on the neutral point side. The V-phase coil 20V has a first end 20Va on the input and output side and a second end 20Vb on the neutral point side. The W-phase coil 20W has a first end 20Wa on the input and output side and a second end 20Wb on the neutral point side. The second ends 20Ub, 20Vb, 20Wb of the coils 20U, 20V, 20W are electrically connected to each other and form a neutral point in a Y-connection. That is, the motor 10 of the present embodiment is a Y-connected motor. In FIG. 1, the first end 20Ua of the U-phase coil 20U, the first end 20Va of the V-phase coil 20V, and the first end 20Wa of the W-phase coil 20W are not distinguished from one another, and are all illustrated as first ends 20a. As shown in FIG. 1, the first end 20a of each coil 20 protrudes beyond the first end face 18e of the stator core 18 toward the one side in the axial direction.

In addition to the first ends 20a described above, part of the coils 20 protrudes beyond the first end face 18e of the stator core 18 toward the one side in the axial direction. The portions protruding beyond the first end face 18e of the stator core 18 are also referred to as "coil end" as part of the coils 20.

Each of the busbars 22 (hereinafter referred to as each busbar 22) is made of a conductive member such as a metal. Each busbar 22 is not flexible like a wire, and is rigid enough that each busbar 22 can at least maintain its own shape against its own weight. A coating film made of an insulating material such as resin may be provided on the surface of each busbar 22. Each busbar 22 electrically connects a corresponding one of the external connection terminals 30U, 30V, and 30W and the first end 20a of a corresponding one of the coils 20. As an example, the busbars 22 include a U-phase busbar 22U, a V-phase busbar 22V, and a W-phase busbar 22W (see FIG. 2). The U-phase busbar 22U electrically connects the U-phase external connection terminal 30U and the first end 20Ua of the U-phase coil 20U. The V-phase busbar 22V electrically connects the V-phase external connection terminal 30V and the first end 20Va of the V-phase coil 20V. The W-phase busbar 22W electrically connects the W-phase external connection terminal 30W and the first end 20Wa of the W-phase coil 20W. In FIG. 1, the U-phase busbar 22U, the V-phase busbar 22V, and the W-phase busbar 22W are not distinguished from one another, and are all illustrated as busbars 22.

Each busbar 22 includes an extending portion 22e and a connecting portion 22c. In each busbar 22, the extending portion 22e is a portion extending in the circumferential direction. The extending portion 22e of each busbar 22 is electrically connected to a corresponding one of the external connection terminals 30U, 30V, and 30W. Specifically, an extending portion 22Ue of the U-phase busbar 22U is electrically connected to the U-phase external connection terminal 30U. An extending portion 22Ve of the V-phase busbar 22V is electrically connected to the V-phase external connection terminal 30V. An extending portion 22We of the W-phase busbar 22W is electrically connected to the W-phase external connection terminal 30W.

In each busbar 22, the connecting portion 22c extends radially inward from the extending portion 22e. The connecting portion 22c of each busbar 22 is electrically connected to the first end 20a of a corresponding one of the coils 20. Specifically, a connecting portion 22Uc of the U-phase busbar 22U is electrically connected to the first end 20Ua of U-phase coil 20U. A connecting portion 22Vc of the V-phase busbar 22V is electrically connected to the first end 20Va of the V-phase coil 20V. A connecting portion 22Wc of the W-phase busbar 22W is electrically connected to the first end 20Wa of W-phase coil 20W. The connecting portion 22c of each busbar 22 and the first end 20a of the coil 20 connected thereto face each other in the radial direction.

The busbar holders 24, 26 hold the busbars 22. Each of the busbar holders 24, 26 (hereinafter referred to as each busbar holder 24, 26) is generally in the shape of a cuboid. Each busbar holder 24, 26 is made of an insulating material such as resin. The busbar holders 24 , 26 are arranged in the circumferential direction, and the extending portion 22e of each busbar 22 extends through one busbar holder 24, 26 or between a plurality of busbar holders 24, 26. As shown in FIGS. 3 to 5, each busbar holder 24, 26 is located radially outward of the first end 20a of a corresponding one of the coils 20. In each busbar holder 24, 26, the connecting portion 22c of a corresponding one of the busbars 22 extends toward the first end 20a of a corresponding one of the coils 20 and is connected to this first end 20a.

The busbar holders 24, 26 include two first busbar holders 24 and a plurality of second busbar holders 26. Each of the two first busbar holders 24 (hereinafter referred to as each first busbar holder 24) protrudes radially outward beyond the outer peripheral surface 18b of the stator core 18. Each of the second busbar holders 26 (hereinafter referred to as each second busbar holder 26) protrudes radially outward beyond the outer peripheral surface 18b of the stator core 18. The radial dimension of each first busbar holder 24 is greater than the radial dimension of each second busbar holder 26.

As described above, the busbar holders 24, 26 are arranged in the circumferential direction. The two first busbar holders 24 are arranged at equal intervals in the circumferential direction. That is, in the present embodiment, the two first busbar holders 24 are arranged at intervals of 180 degrees in the circumferential direction.

As an example, as shown in FIGS. 3 to 5, the busbars 22 are arranged in the axial direction. The busbars 22 are arranged from the one side toward the other side in the axial direction in order of the U-phase busbar 22U, the V-phase busbar 22V, and the W-phase busbar 22W. The connecting portions 22Uc, 22Vc, and 22Wc of the U-phase busbar 22U, the V-phase busbar 22V, and the W-phase busbar 22W are located at different positions in the circumferential direction and are located in different busbar holders 24, 26 from each other.

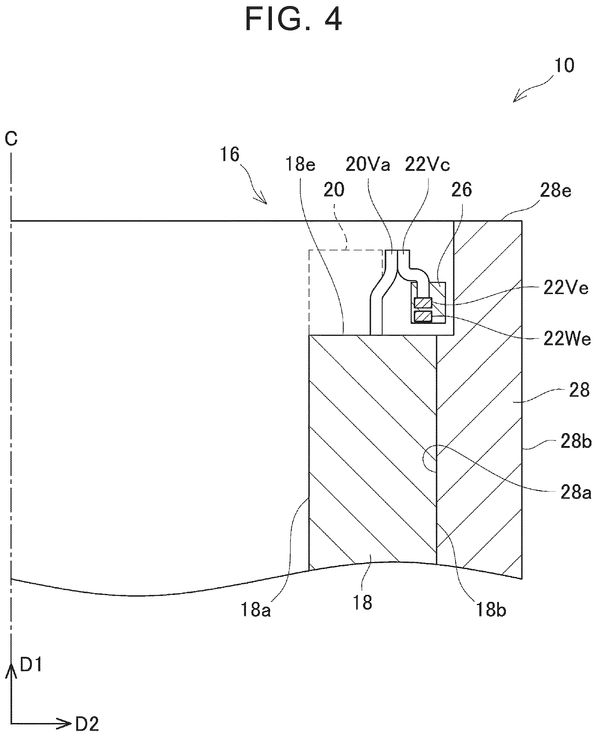

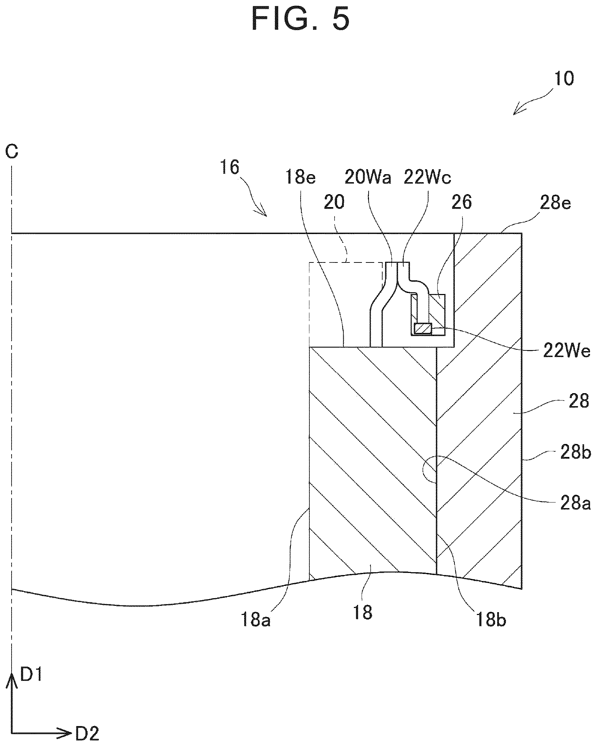

Specifically, as shown in FIG. 3, one of the two first busbar holders 24 holds the extending portions 22Ue, 22Ve, and 22We of the U-phase busbar 22U, the V-phase busbar 22V, and the W-phase busbar 22W. The connecting portion 22Uc of the U-phase busbar 22U extends from the one of the first busbar holders 24 and is connected to the first end 20Ua of the U-phase coil 20U from outside in the radial direction. As shown in FIG. 4, one of the second busbar holders 26 holds the extending portions 22Ve, 22We of the V-phase busbar 22V and the W-phase busbar 22W. The connecting portion 22Vc of the V-phase busbar 22V extends from the one of the second busbar holders 26 and is connected to the first end 20Va of the V-phase coil 20V from outside in the radial direction. As shown in FIG. 5, another one of the second busbar holders 26 holds the extending portion 22We of the W-phase busbar 22W. The connecting portion 22Wc of the W-phase busbar 22W extends from the another one of the second busbar holders 26 and is connected to the first end 20Wa of the W-phase coil 20W from outside in the radial direction.

The housing 28 is located radially outward of the stator core 18. The housing 28 is a generally cylindrical housing member. The housing 28 includes an inner peripheral surface 28a located on the inner side in the radial direction, and an outer peripheral surface 28b located on the outer side in the radial direction. The inner peripheral surface 28a of the housing 28 is in contact with the outer peripheral surface 18b of the stator core 18 and the two first busbar holders 24. The housing 28 thus holds the stator core 18 and the first busbar holders 24 from outside in the radial direction. The housing 28 is not in contact with the second busbar holders 26.

As described above, each first busbar holder 24 is located radially outward of the first end 20a of a corresponding one of the coils 20. In each first busbar holder 24, the connecting portion 22c of a corresponding one of the busbars 22 is connected to the first end 20a of the corresponding one of the coils 20 from outside in the radial direction. With this configuration, a radial holding force applied from the housing 28 to each first busbar holder 24 is easily transmitted to the stator core 18 via the connection portion between the busbar 22 and the coil 20. In other words, the holding force applied from the housing 28 to each first busbar holder 24 can also be used as a force for holding the stator core 18. This can reduce, for example, the holding force that is applied from the housing 28 directly to the stator core 18. In this case, stress (i.e., strain) that is generated in the stator core 18 is reduced, and magnetic loss in the stator core 18 is reduced. In the first busbar holder 24 shown in FIG. 3, the connecting portion 22c of the U-phase busbar 22U is provided. However, the connecting portion 22Vc of the V-phase busbar 22V and/or the connecting portion 22Wc of the W-phase busbar 22W may be provided in addition to or instead of the connecting portion 22c of the U-phase busbar 22U.

The number of first busbar holders 24 is not limited to two. The number of first busbar holders 24 may be one, or may be three or more. However, when a plurality of first busbar holders 24 is present, the first busbar holders 24 are preferably disposed at equal intervals in the circumferential direction. This configuration allows the housing 28 to more stably hold the stator core 18 via the first busbar holders 24.

As an example, the housing 28 in the present embodiment is fixed to the stator core 18 and the two first busbar holders 24 by shrink fitting. Therefore, the housing 28 holds the stator core 18 and the first busbar holders 24 by an interference fit. The stator core 18 and the first busbar holders 24 are subjected to radially inward stress from the housing 28. This configuration allows the housing 28 to firmly hold the stator core 18 and the two first busbar holders 24 regardless of whether shrink fitting is used.

As an example, the housing 28 has two recesses 28r. Each of the two recesses 28r (hereinafter referred to as each recess 28r) is recessed radially outward from the inner peripheral surface 28a of the housing 28. Each recess 28r accommodates at least part of a corresponding one of the first busbar holders 24. In other words, each first busbar holder 24 is in contact with the housing 28 from inside in the radial direction in a corresponding one of the recesses 28r. With this configuration, when manufacturing the motor 10, the stator core 18 can be easily positioned relative to the housing 28 by aligning the position of each first busbar holder 24 with a corresponding one of the recesses 28r of the housing 28.

As an example, each first busbar holder 24 is in contact with the housing 28 on the one side in the axial direction in a corresponding one of the recesses 28r. This configuration allows the stator core 18 to be accurately positioned relative to the housing 28 in the axial direction. As another embodiment, each first busbar holder 24 may be in contact with the housing 28 on the other side in the axial direction in a corresponding one of the recesses 28r. Alternatively, each first busbar holder 24 may be in contact with the housing 28 on both sides in the axial direction in a corresponding one of the recesses 28r. In the motor 10 of the present embodiment, each recess 28r extends to an end face 28e of the housing 28 that is located on the one side in the axial direction. With this configuration, when manufacturing the motor 10, each first busbar holder 24 can be easily disposed in a corresponding one of the recesses 28r.

As an example, each first busbar holder 24 is in contact with the housing 28 on both sides in the circumferential direction in a corresponding one of the recesses 28r. That is, the circumferential dimension of the first busbar holder 24 is substantially equal to the circumferential dimension of the recess 28r. This configuration allows the stator core 18 to be accurately positioned relative to the housing 28 in the circumferential direction. Each first busbar holder 24 need only be in contact with the housing 28 on at least the one side in the circumferential direction in a corresponding one of the recesses 28r.

As an example, as shown in FIG. 3, one of the two first busbar holders 24 holds three busbars 22. Since the first busbar holder 24 holds a plurality of busbars 22, the rigidity of the first busbar holder 24 and the overall rigidity of the busbar holders 24, 26 connected by the busbars 22 become relatively high. Therefore, the holding force applied from the housing 28 to the first busbar holder 24 can be more reliably transmitted to the stator core 18. Not only the one of the first busbar holders 24 but also the other first busbar holder 24 or one or more second busbar holders 26 may hold two or more busbars 22.

The correspondence between the configuration of the motor 10 of the present embodiment and the configuration of the motor according to the present technique will be described. Each of the U-phase coil 20U, the V-phase coil 20V, and the W-phase coil 20W in the present embodiment is an example of the "coil" in the present technique. The first busbar holders 24 in the present embodiment are an example of the "busbar holders" in the present technique. Each of the first end 20Ua of the U-phase coil 20U, the first end 20Va of the V-phase coil 20V, and the first end 20Wa of the W-phase coil 20W in the present embodiment is an example of the "one end of the coil" in the present technique. The U-phase busbar 22U and the extending portion 22Ue and the connecting portion 22Uc of the U-phase busbar 22U in the present embodiment are an example of the "busbar," the "extending portion," and the "connecting portion" in the present technique. The V-phase busbar 22V and the extending portion 22Ve and the connecting portion 22Vc of the V-phase busbar 22V in the present embodiment are an example of the "busbar," the "extending portion," and the "connecting portion" in the present technique. The W-phase busbar 22W and the extending portion 22We and the connecting portion 22Wc of the W-phase busbar 22W in the present embodiment are an example of the "busbar," the "extending portion," and the "connecting portion" in the present technique.

### Second Embodiment

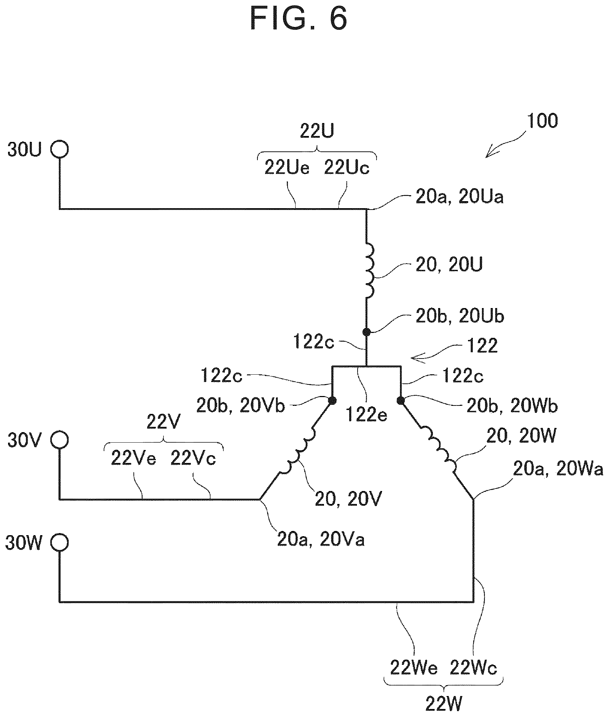

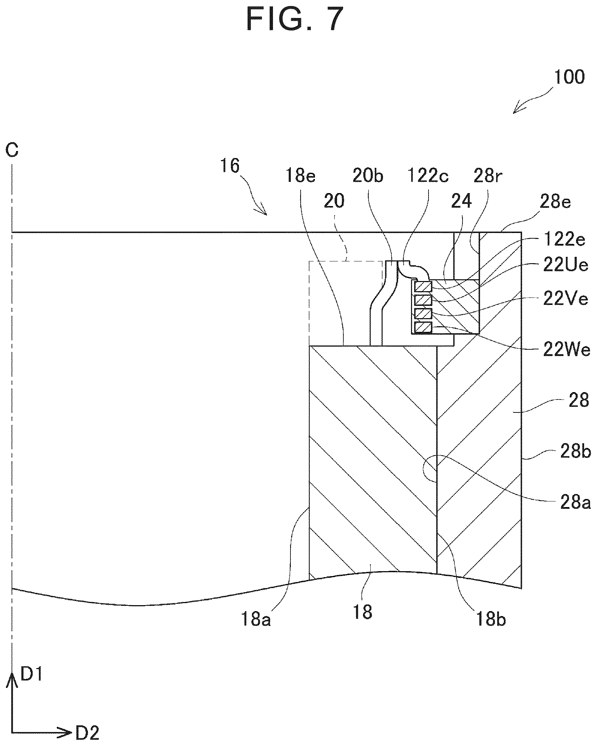

A motor 100 according to a second embodiment will be described with reference to FIGS. 6 and 7. As shown in FIG. 6, the motor 100 of the second embodiment further includes a neutral point busbar 122 in addition to the busbars 22 in the first embodiment. The motor 100 of the second embodiment is different from the motor 10 of the first embodiment in this respect. The neutral point busbar 122 is a busbar that constitutes a neutral point. The neutral point busbar 122 connects second ends 20b of the coils 20 to each other. Specifically, the neutral point busbar 122 electrically connects the second end 20Ub of the U-phase coil 20U, the second end 20Vb of the V-phase coil 20V, and the second end 20Wb of the W-phase coil 20W to each another. As in the first embodiment, the motor 100 of the second embodiment includes the external connection terminals 30U, 30V, and 30W.

The neutral point busbar 122 includes an extending portion 122e and a plurality of connecting portions 122c. The extending portion 122e of the neutral point busbar 122 extends in the circumferential direction. Each of the connecting portions 122c extends radially inward from the extending portion 122e. Specifically, as shown in FIG. 7, one of the first busbar holders 24 holds the extending portion 122e of the neutral point busbar 122 together with the extending portions 22Ue, 22Ve, 22We of the U-phase busbar 22U, the V-phase busbar 22V, and the W-phase busbar 22W. Each of the connecting portions 122c of the neutral point busbar 122 extends from the first busbar holder 24, and is connected to the second end 20b of one of the coils 20 from outside in the radial direction. That is, the second end 20b is the second end 20Ub of the U-phase coil 20U, the second end 20Vb of the V-phase coil 20V, or the second end 20Wb of the W-phase coil 20W. The neutral point busbar 122, the extending portion 122e, and each of the connecting portions 122c in the present embodiment are an example of the "busbar," the "extending portion," and the "connecting portion" in the present technique. Each of the second ends 20b of the coils 20 in the present embodiment, i.e., each of the second end 20Ub of the U-phase coil 20U, the second end 20Vb of the V-phase coil 20V, and the second end 20Wb of the W-phase coil 20W, is an example of the "one end of the coil" in the present technique.

### Third Embodiment

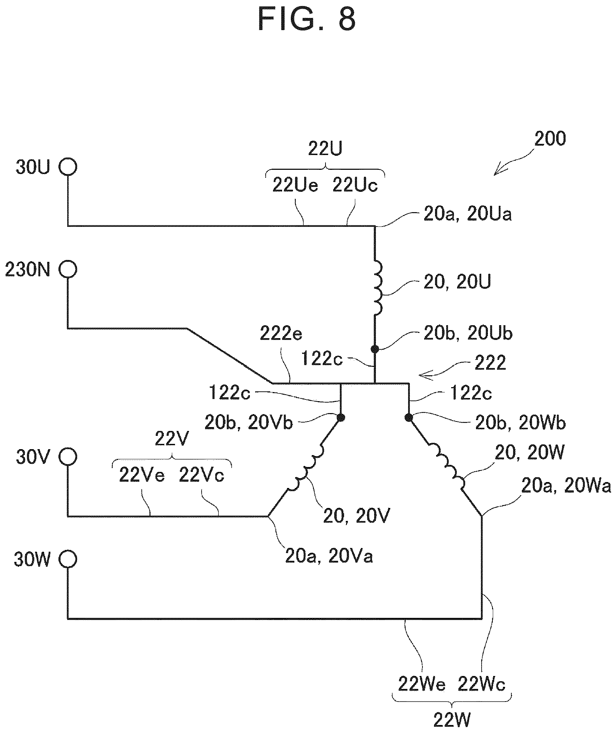

A motor 200 according to a third embodiment will be described with reference to FIG. 8. As shown in FIG. 8, in the motor 200 of the third embodiment, a plurality of external connection terminals 30U, 30V, 30W, and 230N further includes a neutral point external connection terminal 230N in addition to the external connection terminals 30U, 30V, and 30W of the second embodiment. The motor 200 of the third embodiment includes a neutral point busbar 222 instead of the neutral point busbar 122 in the second embodiment. The neutral point busbar 222 includes an extending portion 222e and, as in the second embodiment, the connecting portions 122c. The extending portion 222e of the neutral point busbar 222 is electrically connected to the neutral point external connection terminal 230N. The neutral point busbar 222 electrically connects the second ends 20b of the coils 20 and the neutral point external connection terminal 230N of the motor 300. That is, the motor 200 of the third embodiment is different from the motor 100 of the second embodiment in these respects. The neutral point external connection terminal 230N is an example of the "external connection terminal" in the present technique.

### Fourth Embodiment

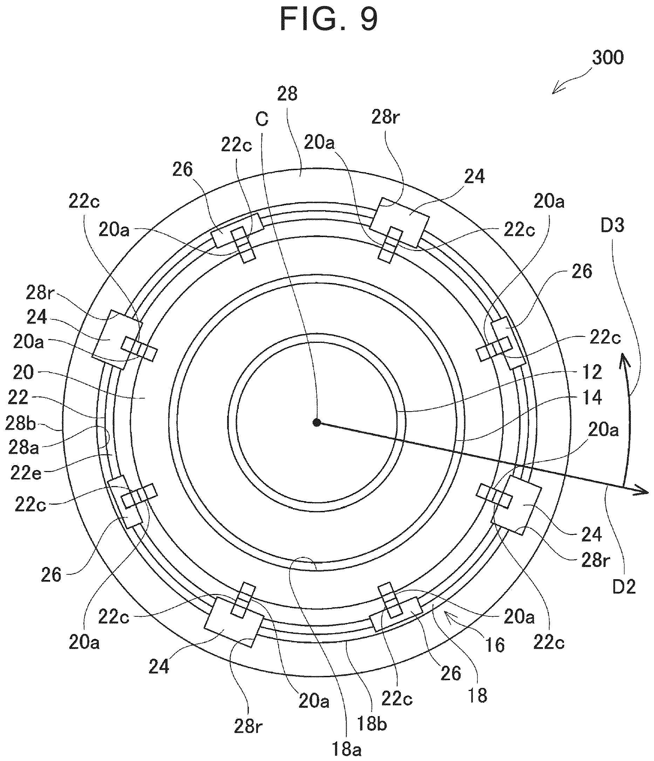

A motor 300 according to a fourth embodiment will be described with reference to FIG. 9. As shown in FIG. 9, the motor 300 of the fourth embodiment includes four first busbar holders 24. The motor 300 of the fourth embodiment is different from the motor 10 of the first embodiment in this respect. The four first busbar holders 24 are arranged at equal intervals in the circumferential direction. That is, in the fourth embodiment, the four first busbar holders 24 are arranged at intervals of 90 degrees in the circumferential direction. This configuration allows the housing 28 to more stably hold the stator core 18 via the first busbar holders 24.

### Fifth Embodiment

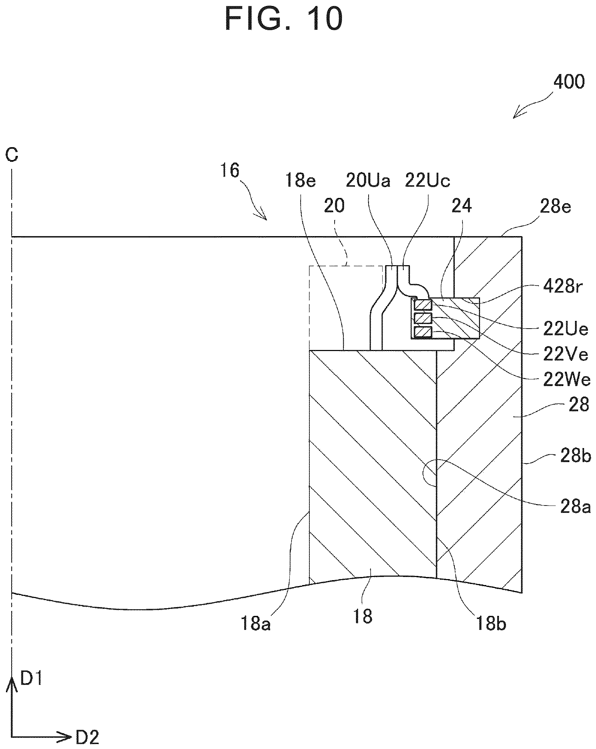

A motor 400 according to a fifth embodiment will be described with reference to FIG. 10. As shown in FIG. 10, in the motor 400 of the fifth embodiment, the configuration of one of the two recesses 28r in the first embodiment is modified. The motor 400 of the fifth embodiment is different from the motor 10 of the first embodiment in this respect. The motor 400 has a recess 28r and a second recess 428r. The second recess 428r is provided only in the range that faces one of the two first busbar holders 24. In this case, the one of the first busbar holders 24 is in contact with the housing 28 from inside in the radial direction, on both sides in the axial direction, and on both sides in the circumferential direction in the second recess 428r. This configuration allows the stator core 18 to be accurately positioned relative to the housing 28. As another embodiment, all of the recesses of the housing 28 may be second recesses 428r.

In all of the embodiments described above, each of the first busbar holders 24 is in contact with the housing 28 in a corresponding one of the recesses 28r, 428r. As a further embodiment, the first busbar holders 24 may be in contact with the housing 28 in one recess. In this case, the inner peripheral surface 28a of the housing 28 may have a recess that is long in the circumferential direction. In a still further embodiment, the housing 28 may not have any recess 28r, 428r.

Although eight busbar holders 24, 26 are illustrated in the drawings, the number of busbar holders 24, 26 is not limited to this. The number of busbar holders 24, 26 can be changed as appropriate depending on the configuration of the motor.

## Claims

1. A motor (10; 100; 200; 300; 400) comprising:
a cylindrical stator core (18);
a coil (20) disposed in the stator core (18);
a busbar (22) configured to be connected to one end of the coil (20) that protrudes beyond an end face of the stator core (18), the busbar (22) including a connecting portion (22c) connected to the one end of the coil (20) from outside in a radial direction;
at least one busbar holder (24, 26) configured to hold the busbar (22) and located radially outward of the one end of the coil (20); and
a housing (28) configured to hold the stator core (18) and the at least one busbar holder (24, 26) from outside in the radial direction, wherein the connecting portion (22c) extends from the busbar holder (24, 26).

2. The motor (10; 100; 200; 300; 400) according to claim 1, wherein the housing (28) has a recess that accommodates at least part of the busbar holder (24, 26), and the busbar holder (24, 26) is in contact with the housing (28) from inside in the radial direction in the recess.

3. The motor (10; 100; 200; 300; 400) according to claim 2, wherein the busbar holder (24, 26) is in contact with the housing (28) on at least one side in an axial direction in the recess.

4. The motor (10; 100; 200; 300; 400) according to claim 2, wherein the busbar holder (24, 26) is in contact with the housing (28) on at least one side in a circumferential direction in the recess.

5. The motor (10; 100; 200; 300; 400) according to claim 4, wherein the housing (28) holds the stator core (18) and the busbar holder (24, 26) by an interference fit.

6. The motor (10; 100; 200; 300; 400) according to claim 1, wherein the busbar (22) includes an extending portion extending in a circumferential direction, and the at least one busbar holder (24, 26) includes a plurality of busbar holders (24, 26) that holds the extending portion of the busbar (22) and that is held by the housing (28) from outside in the radial direction.

7. The motor (10; 100; 200; 300; 400) according to claim 6, wherein the busbar holders (24, 26) are arranged at equal intervals in the circumferential direction.

8. The motor (10; 100; 200; 300; 400) according to claim 1, wherein the busbar (22) is a busbar configured to electrically connect an external connection terminal of the motor (10; 100; 200; 300; 400) and the one end of the coil (20).

9. The motor (10; 100; 200; 300; 400) according to claim 8, wherein the motor (10; 100; 200; 300; 400) is a three-phase motor, the external connection terminal is a U-phase external connection terminal, a V-phase external connection terminal, or a W-phase external connection terminal, and the one end of the coil (20) is one end on an input and output side of a U-phase coil, a V-phase coil, or a W-phase coil.

10. The motor (10; 100; 200; 300; 400) according to claim 8, wherein the motor (10; 100; 200; 300; 400) is a three-phase motor, the external connection terminal is a neutral point external connection terminal, and the one end of the coil (20) is an end on a neutral point side of a U-phase coil, a V-phase coil, or a W-phase coil.

11. The motor (10; 100; 200; 300; 400) according to claim 1, wherein the motor (10; 100; 200; 300; 400) is a three-phase motor, and the busbar (22) is a neutral point busbar that is configured to electrically connect the one end of the coil (20) and one end of another coil and that constitutes a neutral point.

12. The motor (10; 100; 200; 300; 400) according to claim 1, wherein the busbar holder (24, 26) holds a plurality of busbars including the busbar (22).
